# EUROPÄISCHE PATENTSCHRIFT

(11) **EP 4 019 297 B1**
(45) Veröffentlichungstag und Bekanntmachung des Hinweises auf die Patenterteilung: **12.03.2025**
(21) Anmeldenummer: 21201448.4
(22) Anmeldetag: 07.10.2021
(51) Int. Cl.: B60D 1/06, B60D 1/64, H01R 13/73

(54) **EINBAUEINHEIT**
BUILT-IN UNIT
UNITÉ D'INSTALLATION

(30) Priorität: 29.10.2020 DE 102020128532
(43) Veröffentlichungstag der Anmeldung: 29.06.2022
(73) Patentinhaber: ACPS Automotive GmbH, 74379 Ingersheim (DE)
(72) Erfinder: Kadnikov, Aleksej, 71229 Leonberg (DE)
(74) Vertreter: Hoeger, Stellrecht & Partner Patentanwälte mbB

(56) Entgegenhaltungen:
- EP-A1- 2 952 367
- WO-A1-01/19937
- DE-U1- 202010 003 623
- DE-U1- 29 825 216

## Beschreibung

Die Erfindung betrifft eine Einbaueinheit für ein an einer Karosserie eines Kraftfahrzeugs angeordnetes Trägerelement einer Trägereinheit, umfassend ein Gehäuse mit einem sich auf einer ersten Außenseite an einem Aufnahmebereich des Trägerelements abstützenden ersten Gehäuseabschnitt und einem in eine Aufnahme des Aufnahmebereichs an dem Trägerelement eingreifenden zweiten Gehäuseabschnitt, und eine sich bei in der Aufnahme fixierter Einbaueinheit an dem Aufnahmebereich abstützende Fixiereinheit.

Derartige Einbaueinheiten sind aus dem Stand der Technik bekannt. Das Dokument DE 298 25 216 U1 offenbart eine aus dem Stand der Technik bekannte Einbaueinheit für ein an einer Karosserie eines Kraftfahrzeugs angeordnetes Trägerelement einer Trägereinheit, umfassend ein Gehäuse mit einem sich auf einer ersten Außenseite an einem Aufnahmebereich des Trägerelements abstützenden ersten Gehäuseabschnitt und einem in eine Aufnahme des Aufnahmebereichs an dem Trägerelement eingreifenden zweiten Gehäuseabschnitt, und eine sich bei in der Aufnahme fixierter Einbaueinheit an dem Aufnahmebereich abstützende Gehäusekappe, welche mit dem Gehäuse durch eine Klebeverbindung verbunden ist.

Der Erfindung liegt die Aufgabe zugrunde, eine derartige Einbaueinheit zu schaffen, die sich möglichst einfach, dauerhaft und zuverlässig an der Aufnahme des Trägerelements fixieren lässt.

Diese Aufgabe wird bei einer Einbaueinheit der eingangs beschriebenen Art erfindungsgemäß dadurch gelöst, dass die Fixiereinheit einen Fixierkörper aufweist, der bei in die Aufnahme fixierter Einbaueinheit in einem plastisch verformbaren oder fließfähigen Zustand durch zumindest bereichsweises Anformen an einen Verbindungsbereich des Gehäuses und nachfolgendes Aushärten mit diesem Verbindungsbereich verbunden ist.

Der Vorteil der erfindungsgemäßen Lösung ist somit darin zu sehen, dass ein derart ausgebildeter und an den Verbindungsbereich des Gehäuses angeformter Fixierkörper besonders einfach herstellbar und montierbar ist.

Insbesondere kann eine derartige Einbaueinheit eine Steckdose für einen mit dem Kraftfahrzeug verbindbaren Anhänger oder einen Lastenträger und/oder eine Steuereinheit für eine Komponente der Trägereinheit und/oder des Anhängers oder Lastenträgers umfassen.

Insbesondere ist es dabei günstig, wenn der Verbindungsbereich des Gehäuses umfangsseitig des zweiten Gehäuseabschnitts angeordnet ist.

Dabei kann der Verbindungsbereich den gesamten zweiten Gehäuseabschnitt umschließen oder auch nur in einzelnen Bereichen und in Teilen des Umfangs des zweiten Gehäuseabschnitts vorgesehen sein.

Besonders vorteilhaft ist der Verbindungsbereich dann ausgebildet, wenn dieser eine sich in Richtung von dem ersten Gehäuseabschnitt weg erstreckende und in radialer Richtung zur Mittelachse des Gehäuses variierende Oberflächenstruktur aufweist.

Eine derartige variierende Oberflächenstruktur kann in unterschiedlichster Art und Weise ausgebildet sein.

Die Oberflächenstruktur kann beispielsweise durch einzelne lokale Vorsprünge ausgebildet sein.

Eine andere Ausführungsform sieht vor, dass der Verbindungsbereich durch Rippen und zwischen diesen Rippen liegende Vertiefungen gebildet ist.

Die erfindungsgemäße Lösung der eingangs genannten Aufgabe sieht vor, dass die Fixiereinheit einen Fixierkörper aufweist, der bei in der Aufnahme fixierter Einbaueinheit in einem plastisch verformbaren oder fließfähigen Zustand durch zumindest bereichsweises Anformen an einen Anformbereich der Aufnahme und nachfolgendes Aushärten mit dem Anformbereich verbunden ist.

Das heißt, dass in diesem Fall der Fixierkörper durch Anformen die Verbindung zu dem Aufnahmebereich, insbesondere dem Anformbereich des Aufnahmebereichs, herstellt.

Der Vorteil dieser Lösung ist darin zu sehen, dass sich ohne zusätzlichen Aufwand Toleranzen in der Form des Aufnahmebereichs, die insbesondere beim Schmieden desselben auftreten, einfach ausgleichen lassen.

Besonders vorteilhaft hierbei ist es, wenn der Anformbereich eine sich in Richtung der Mittelachse eines Aufnahmekanals des Aufnahmebereichs erstreckende und dabei in radialer Richtung zur Mittelachse des Aufnahmekanals variierende Oberflächenstruktur aufweist.

Alternativ oder ergänzend ist ebenfalls vorgesehen, dass ein Innenwandbereich der Aufnahme eine sich in Richtung von dem ersten Gehäuseabschnitt weg erstreckende und sich dabei in radialer Richtung zur Mittelachse des Aufnahmekanals aufweitende Oberflächenstruktur aufweist.

Darüber hinaus ist vorzugsweise vorgesehen, dass ein Innenwandbereich der Aufnahme sich mit zunehmender Erstreckung von dem ersten Gehäuseabschnitt weg in radialer Richtung zur Mittelachse erweiternd ausgebildet ist. Zur Herstellung des Fixierkörpers ist es prinzipiell denkbar, das den Fixierkörper bildende Material in dem plastischen oder fließfähigen Zustand, in dem dieses anformbar ist, in die Aufnahme zu bringen und dann zu dem Fixierkörper auszuhärten.

Die erfindsungsgemäße Lösung sieht vor, dass der Fixierkörper aus einem Vorkörper hergestellt ist, dessen Material zum Anformen an den jeweiligen Bereich von einem festen in einen plastisch verformbaren oder fließfähigen Zustand überführbar ist und zur Bildung des das Gehäuse an dem Aufnahmebereich fixierenden Fixierkörpers in den ausgehärteten Zustand überführbar ist.

Besonders günstig ist es dabei, wenn der Vorkörper aus einem Material hergestellt ist, das thermisch in einen plastisch verformbaren oder fließfähigen Zustand und, insbesondere durch Abkühlen, in einen ausgehärteten Zustand überführbar ist.

Dadurch sind die verschiedenen Zustände des Materials einfach durch Erhitzen und Abkühlen realisierbar.

Besonders vorteilhaft ist es, wenn das Material in einen flüssigen Zustand und einen ausgehärteten Zustand bringbar ist.

Eine besonders einfache Lösung sieht vor, dass der Vorkörper aus einem Heißklebermaterial hergestellt ist, welches sich thermisch in einfacher Weise in einen plastischen oder fließfähigen Zustand und durch Abkühlen in einen ausgehärteten Zustand überführen lässt.

Eine weitere vorteilhafte Lösung sieht vor, dass der Vorkörper neben dem thermisch in einen plastisch verformbaren oder fließfähigen Zustand überführbaren sowie thermisch aushärtbaren Material in dieses eingebettete Heizelement aufweist, mittels welcher der plastische oder fließfähige Zustand des Materials, insbesondere durch Bestromen, herstellbar ist.

Damit besteht in einfacher Weise die Möglichkeit, den Vorkörper in die gewünschte Position einzusetzen und mittels der Heizelemente dessen Material in den plastisch verformbaren oder fließfähigen Zustand zu überführen.

Besonders vorteilhaft ist es, wenn die Heizelemente in dem ausgehärteten Zustand des Fixierelements in diesem eingebettet sind.

Somit besteht beispielsweise auch eine einfache Möglichkeit der Demontage der Einbaueinheit, indem durch erneutes Bestromen der Heizelemente wiederum das Material des Fixierelements in einen plastisch deformierbaren oder fließfähigen Zustand überführt werden kann.

Besonders günstig ist es, wenn die Heizelemente Anschlüsse aufweisen, die sich ausgehend von dem Vorkörper in Richtung weg von dem ersten Gehäuseabschnitt erstrecken, so dass die Anschlüsse der Heizelemente von Seiten der zweiten Außenseite der Aufnahme einfach zugänglich sind.

Des Weiteren ist vorzugsweise vorgesehen, dass der Fixierkörper im plastisch verformbaren oder fließfähigen Zustand sich bei in den Aufnahmebereich eingesetztem zweiten Gehäuseabschnitt sowohl an den Verbindungsbereich des zweiten Gehäuseabschnitts als auch an den Anformbereich des Aufnahmebereichs anformt.

Ferner ist zweckmäßigerweise vorgesehen, dass der Vorkörper im nicht angeformten festen Zustand eine Vorform aufweist, die ermöglicht, dass dieser in einen Zwischenraum zwischen der Innenwand der Aufnahme und dem zweiten Gehäuseabschnitt einsetzbar ist.

Die Vorform kann dabei beliebig ausgebildet sein.

Beispielsweise kann der Vorkörper in Form einzelner Blöcke eingesetzt werden.

Es ist aber auch denkbar, dass der Vorkörper zumindest als Teil eines Ringkörpers, insbesondere als im wesentlicher oder auch ganz geschlossener Ringkörper, ausgebildet ist.

Eine besonders vorteilhafte Lösung sieht vor, dass der Fixierkörper bei an dem Aufnahmebereich fixierter Einbaueinheit und im angeformten Zustand in dem Zwischenraum zwischen der Innenwand der Aufnahme und dem zweiten Gehäuseabschnitt angeordnet ist.

Ferner sieht eine weitere vorteilhafte Lösung vor, dass der Fixierkörper bei an dem Aufnahmebereich fixierter Einbaueinheit den Zwischenraum zwischen der Innenwand der Aufnahme und dem zweiten Gehäuseabschnitt zumindest teilweise ausfüllt.

Eine besonders gute Fixierung ist dann möglich, wenn an dem Aufnahmebereich fixierten Zustand der Einbaueinheit der Fixierkörper einerseits an dem Aufnahmebereich, insbesondere an der Innenwand der Aufnahme, und andererseits umfangsseitig des zweiten Gehäuseabschnitts anliegt, um somit den zweiten Gehäuseabschnitt optimal relativ zum Aufnahmebereich abzustützen.

Des Weiteren sieht eine vorteilhafte Lösung der erfindungsgemäßen Einbaueinheit vor, dass an dem Gehäuse, insbesondere an dem zweiten Gehäuseabschnitt, mindestens ein Vorsprung angeordnet ist, der in eine an dem Aufnahmebereich angeordnete Ausnehmung eingreift und das Gehäuse drehfest an dem Aufnahmebereich festlegt.

Insbesondere lässt sich dies dadurch realisieren, dass der mindestens eine Vorsprung an dem zweiten Gehäuseabschnitt im Anschluss an den ersten Gehäuseabschnitt angeformt ist.

Besonders günstig ist es, wenn an dem Gehäuse, insbesondere an dem zweiten Gehäuseabschnitt, mehrere Vorsprünge angeordnet sind, von denen jeder in eine an dem Aufnahmebereich angeordnete Ausnehmung eingreift. Eine besonders vorteilhafte Realisierung der erfindungsgemäßen Lösung sieht vor, dass der Verbindungsbereich des zweiten Gehäuseabschnitts im Anschluss an den mindestens einen Vorsprung an dem zweiten Gehäuseabschnitt angeordnet ist.

Darüber hinaus ist zweckmäßigerweise vorgesehen, dass der zweite Gehäuseabschnitt auf einer dem ersten Gehäuseabschnitt abgewandten Seite mit einem Abschlussdeckel verschlossen ist.

Darüber hinaus betrifft die Erfindung ein mit einer Einbaueinheit versehenes Trägerelement, bei welchem die Einbaueinheit gemäß einem oder mehreren der vorstehend genannten Merkmale ausgebildet ist.

Außerdem betrifft die Erfindung ein Verfahren gemäß Anspruch 11 zum Fixieren einer Einbaueinheit in einem Trägerelement einer Trägereinheit.

Alternativ oder ergänzend ist bei einem derartigen Verfahren vorgesehen, dass die Fixiereinheit durch einen Fixierkörper gebildet wird, der bei in die Aufnahme eingesetzter Einbaueinheit in einen plastisch verformbaren oder fließfähigen Zustand durch zumindest bereichsweises Anformen an einen Aufnahmebereich der Aufnahme und nachfolgendes Aushärten mit dem Aufnahmebereich verbunden wird.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs mit einer Trägereinheit umfassend ein beispielsweise als Kugelhals ausgebildetes Trägerelement;
- Fig. 2: eine perspektivische Darstellung der erfindungsgemäßen Trägereinheit gemäß Fig. 1;
- Fig. 3: einen Blick auf das Trägerelement der Trägereinheit in Richtung des Pfeils A in Fig. 2;
- Fig. 4: einen Schnitt längs Linie 4-4 in Fig. 7;
- Fig. 5: eine perspektivische Darstellung einer erfindungsgemäßen Einbaueinheit mit einem Fixierelement, angeformt an ein Gehäuse der Einbaueinheit sowie in einer an die Aufnahme angeformten Form, allerdings ohne Darstellung der Aufnahme und des Aufnahmebereichs, an welchen das Fixierelement angeformt ist;
- Fig. 6: eine Explosionsdarstellung der erfindungsgemä0en Einheit mit dem Fixierelement in der Form gemäß Fig. 5;
- Fig. 7: eine seitliche Draufsicht auf das Trägerelement gemäß Fig. 3 in Richtung des Pfeils B bei eingebauter Einbaueinheit mit Blick auf einen Abschlussdeckel und eine an diesem vorgesehene Kabelzuführung und

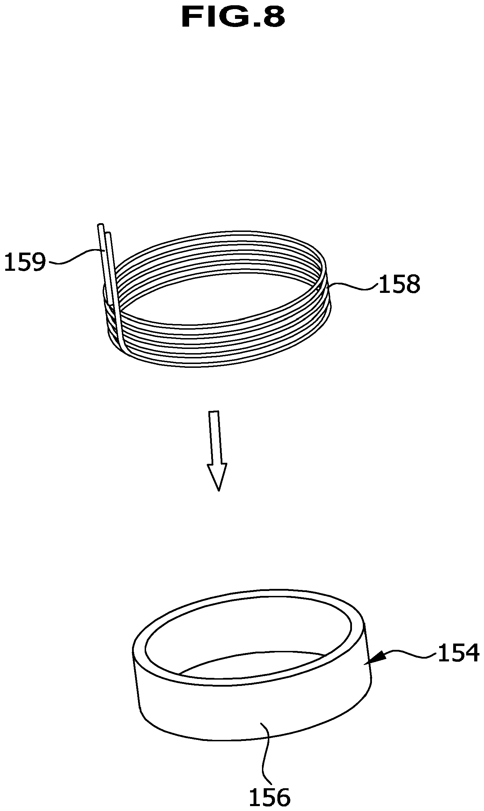

- Fig. 8: eine Explosionsdarstellung einer Vorform des Fixierelements mit davon getrennter Darstellung einer Heizwicklung.

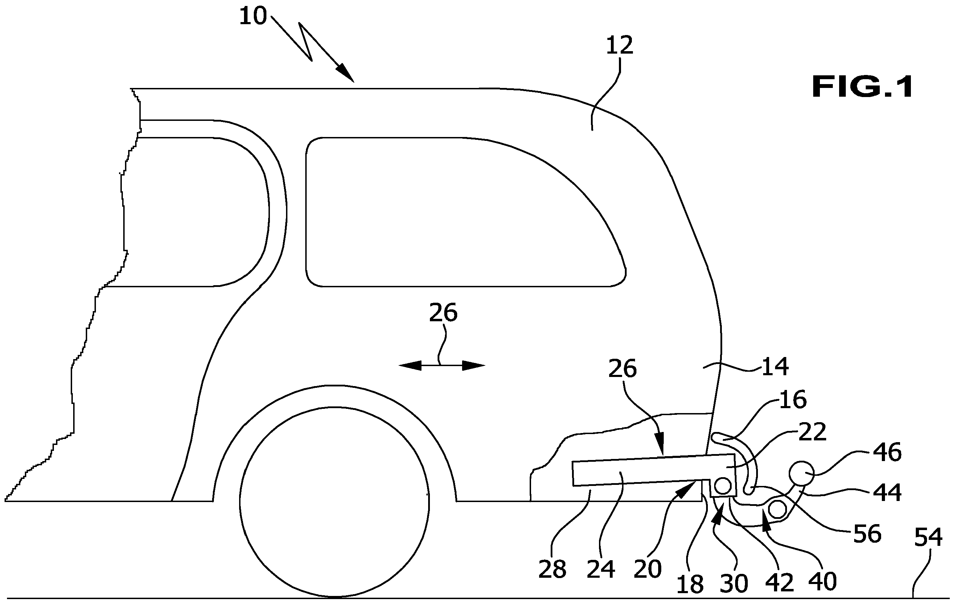

Ein in Fig. 1 dargestelltes und als Ganzes mit 10 bezeichnetes Kraftfahrzeug umfasst eine Karosserie 12, welche an einem Heckbereich 14 eine Stoßfängereinheit 16 trägt.

An einer von der Stoßfängereinheit 16 überdeckten Rückseite 18 des Heckbereichs 14 ist ein Querträger 22 einer als Ganzes mit 20 bezeichneten Trägereinheit vorgesehen, welcher durch Seitenträger 24 an dem Heckbereich der Karosserie 12 fixiert ist, beispielsweise dadurch fixiert ist, dass sich die Seitenträger 24 parallel zu einer Längsrichtung 26 der Karosserie 12 erstrecken und in Seitenbereichen 28 des Heckbereichs 14 an diesem fixiert sind.

Dabei ist der Querträger 22 zwischen der Rückseite 18 des Heckbereichs 14 und der Stoßfängereinheit 16 angeordnet und durch die Stoßfängereinheit 16 überdeckt.

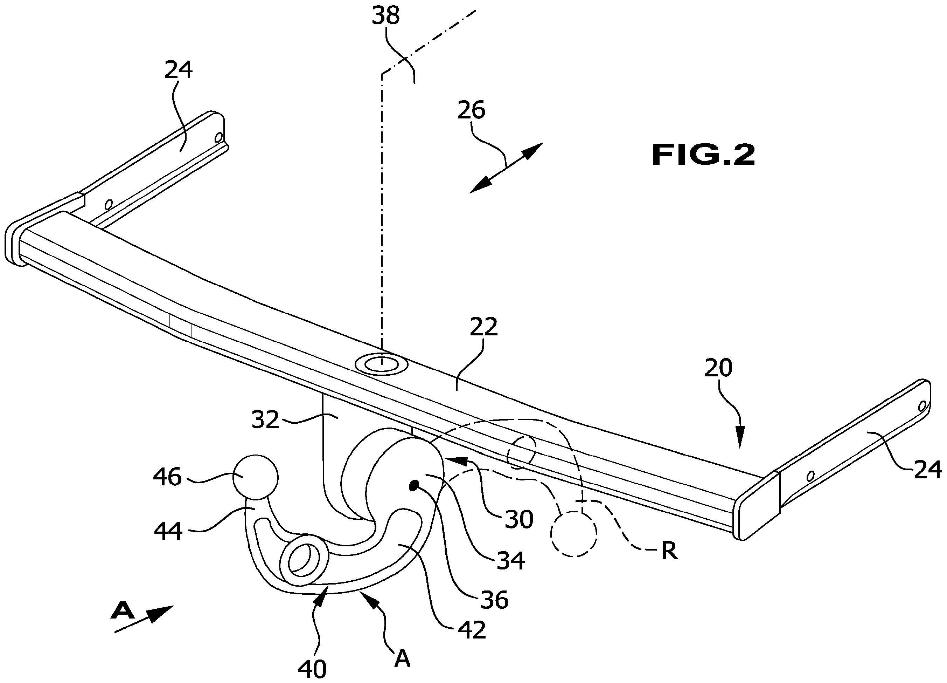

Die Trägereinheit 20 ist ferner mit einer als Ganzes mit 30 bezeichneten Lagereinheit versehen, deren Lagerbasis 32 mit dem Querträger 22 verbunden ist, wie in Fig. 2 dargestellt.

Die Lagereinheit 30 umfasst ferner ein als Ganzes mit 34 bezeichnetes Lagerelement, welches mit einem ersten Ende 42 eines als Ganzes mit 40 bezeichneten und ebenfalls von der Trägereinheit 20 umfassten, insbesondere als Kugelhals ausgebildeten, Trägerelements verbunden ist, das sich von dem ersten Ende 42 bis zu einem zweiten Ende 44 erstreckt und an seinem zweiten Ende 44 ein als Ganzes mit 46 bezeichnetes Kupplungselement trägt, das somit von der Trägereinheit 20 getragen ist und beispielsweise als Kupplungskugel ausgebildet ist.

Das Lagerelement 34 kann ein mit der Lagerbasis 32 fest verbundenes oder ein abnehmbar an der Lagerbasis 32 montierbares Lagerelement sein.

Alternativ kann bei der in Fig. 2 dargestellten Lösung das Lagerelement 34 jedoch ein Schwenklagerelement sein, welches relativ zur Lagerbasis 32 um eine mit 36 bezeichnete Schwenkachse verschwenkbar ist, so dass das Trägerelement 40 von der in Fig. 2 mit durchgezogenen Linien dargestellten Arbeitsstellung A in eine mit gestrichelten Linien dargestellte Ruhestellung R verschwenkbar ist, in welcher sich Trägerelement 40 ausgehend von der Lagerbasis 32 quer zur Längsrichtung 26 der Kraftfahrzeugkarosserie 12 und damit insbesondere längs des Querträgers 22 erstreckt.

Damit verläuft das Trägerelement 40 in der gestrichelt dargestellten Ruhestellung R quer zu einer vertikalen Längsmittelebene 38 der Kraftfahrzeugkarosserie 12 und auch der Trägereinheit 20, wobei die vertikale Längsmittelebene 38 damit auch parallel zur Längsrichtung 26 verläuft.

Ferner verläuft auch die Schwenkachse 36 vorzugsweise quer zur vertikalen Längsmittelebene 38, jedoch schräg zu dieser, insbesondere relativ zur vertikalen Längsmittelebene um einen Winkel von weniger als 90° geneigt, wobei der Winkel beispielsweise weniger als 70° oder insbesondere mehr als 20° beträgt.

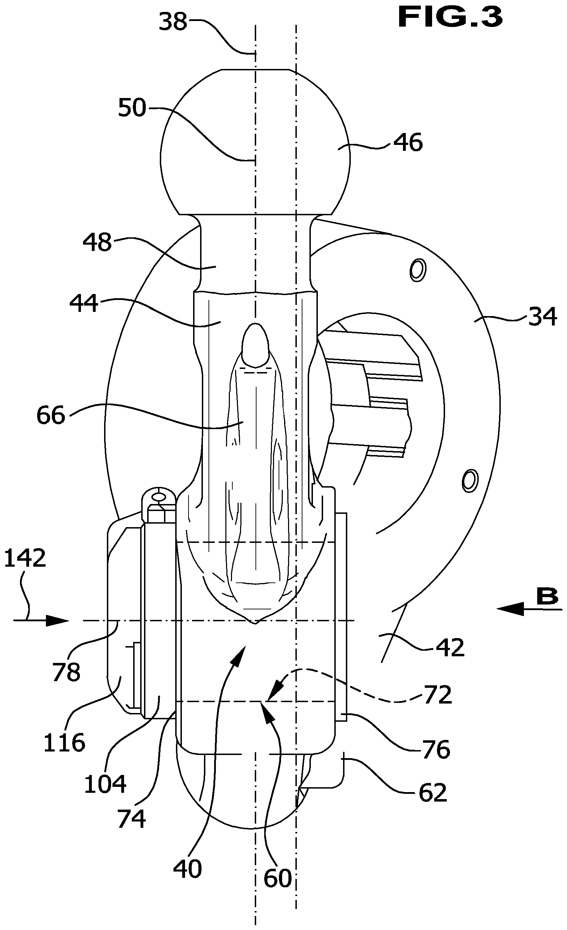

Ein Ausführungsbeispiel eines derartigen Trägerelements 40, insbesondere eines Kugelhalses, ist in Fig. 3 vergrößert dargestellt, wobei das Trägerelement 40 insbesondere mit dem Lagerelement 34 fest verbunden, vorzugsweise an diesem angeformt, ist und das Lagerelement 34 in diesem Fall als Schwenklagerelement zur schwenkbaren Lagerung an der Lagerbasis 32 ausgebildet ist.

Bei dem dargestellten Ausführungsbeispiel des Trägerelements 40 trägt dieses insbesondere an seinem zweiten Ende 44 einen Kugelansatz 48, der eine zylindrisch zu einer Kugelmittelachse verlaufende Mantelfläche aufweist, die in einem radialen Abstand um eine Kugelmittelachse 50 verläuft, der kleiner ist als ein Radius der Kupplungskugel 46.

Bei dem dargestellten Ausführungsbeispiel des Trägerelements 40 weist dieses, wie in Fig. 3 dargestellt, einen einstückig in das Trägerelement 40 integrierten und vorzugsweise in Form eines Ringkörpers 62 ausgebildeten Aufnahmebereich 60 auf, der zwischen einem ersten Abschnitt 64 liegt, welcher sich von dem ersten Ende 42 des Trägerelements 40 bis zum Ringkörper 62 erstreckt, und einem zweiten Abschnitt 66 liegt, welcher sich von dem Ringkörper 62 bis zu dem zweiten Ende 44 des Trägerelements 40 erstreckt.

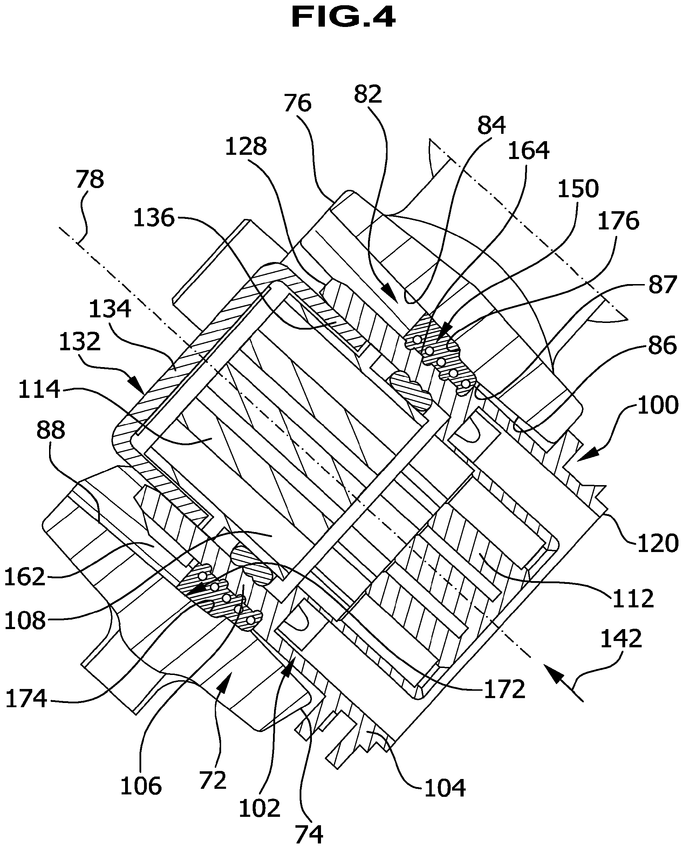

Der Ringkörper 62 umschließt eine als Ganzes mit 72 bezeichnete Aufnahme, welche sich beispielsweise in Form eines Durchbruchs von einer ersten Außenseite 74 des Ringkörpers 62 bis zu einer zweiten Außenseite 76 des Aufnahmebereichs 60 erstreckt und beispielsweise eine Mittelachse 78 bildet, die quer zur vertikalen Längsmittelebene 38 verläuft, und beispielsweise gegenüber einer Senkrechten zur vertikalen Längsmittelebene 38 um einen spitzen Winkel, beispielsweise im Bereich von 5° bis 30° geneigt sein kann (Fig. 3 und Fig. 4).

Die Aufnahme 72 wird insbesondere gebildet durch einen Aufnahmekanal 82 mit einer Innenwand 84, die im Anschluss an die erste Außenseite 74 des Aufnahmebereichs 60 einen im Wesentlichen konisch zur Mittelachse 78 verlaufenden und um die Mittelachse 78 des Aufnahmekanals 78 umlaufenden Wandbereich 86 aufweist, der sich von der Außenseite 74 ausgehend bis zu einer Engstelle 87 verengt, sowie einen von der Engstelle 87 ausgehenden und sich bis zur zweiten Außenseite 76 konisch erweiternden Wandbereich 88 aufweist, der somit beim Übergang zur zweiten Außenseite 76 des Aufnahmebereichs 60 in größerem radialen Abstand von der Mittelachse 78 verläuft als nahe der Engstelle 87.

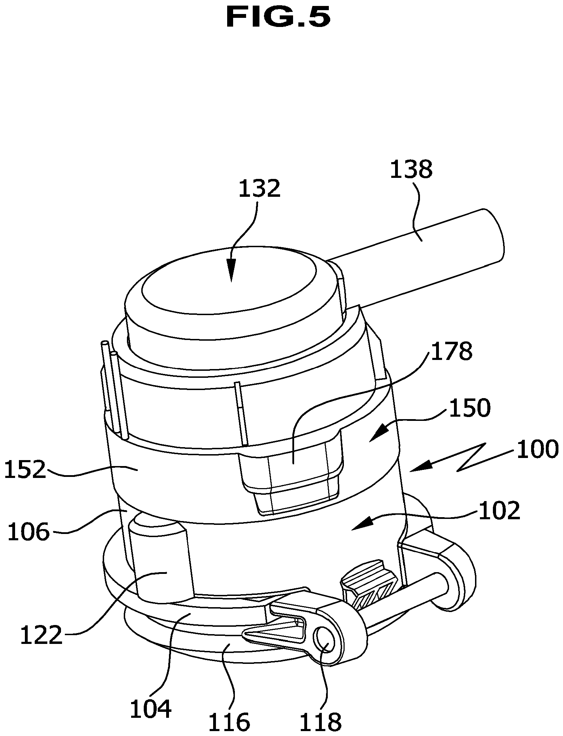

In der Aufnahme 72 ist eine als Ganzes mit 100 bezeichnete Einbaueinheit, beispielsweise ausgebildet als Steckdose, aufgenommen, welche mit einem Gehäuse 102 versehen ist, das einen ersten Gehäuseabschnitt 104 aufweist, welcher an der ersten Außenseite 74 anliegt und insbesondere von dieser abgestützt ist (Fig. 5).

Von dem ersten Gehäuseabschnitt 104 ausgehend erstreckt sich ein zweiter Gehäuseabschnitt 106 in den Aufnahmekanal 82 hinein in Richtung der zweiten Außenseite 76, wobei dessen Mittelachse beispielsweise mit der Mittelachse 78 zusammenfällt.

Vorzugsweise ist dabei der zweite Gehäuseabschnitt 106 einstückig an den ersten Gehäuseabschnitt 104 angeformt, so dass diese einen Gehäuseinnenraum 108 umschließen, in welchem beispielsweise ein Steckkontaktelement 112 und ein mit diesem kombiniertes Leitungsanschlusselement 114 und/oder auch eine elektrische Schaltung, gegebenenfalls noch mit Sensoren, angeordnet sind.

Eine Zugänglichkeit zum beispielsweise im Gehäuseinnenraum 108 angeordneten Steckkontaktelementen 112 wird beispielsweise durch einen den ersten Gehäuseabschnitt 104 abschließenden Deckel 116 ermöglicht, welcher mittels eines Scharniers 118 relativ zum ersten Gehäuseabschnitt 104 verschwenkbar ist und auf einer dem zweiten Gehäuseabschnitt 106 gegenüberliegenden Seite am ersten Gehäuseabschnitt 104 vor der Außenseite 74 angeordnet ist (Fig. 5), so dass durch Verschwenken des Deckels 116 eine Öffnung 120 des Gehäuses 102 zugänglich ist.

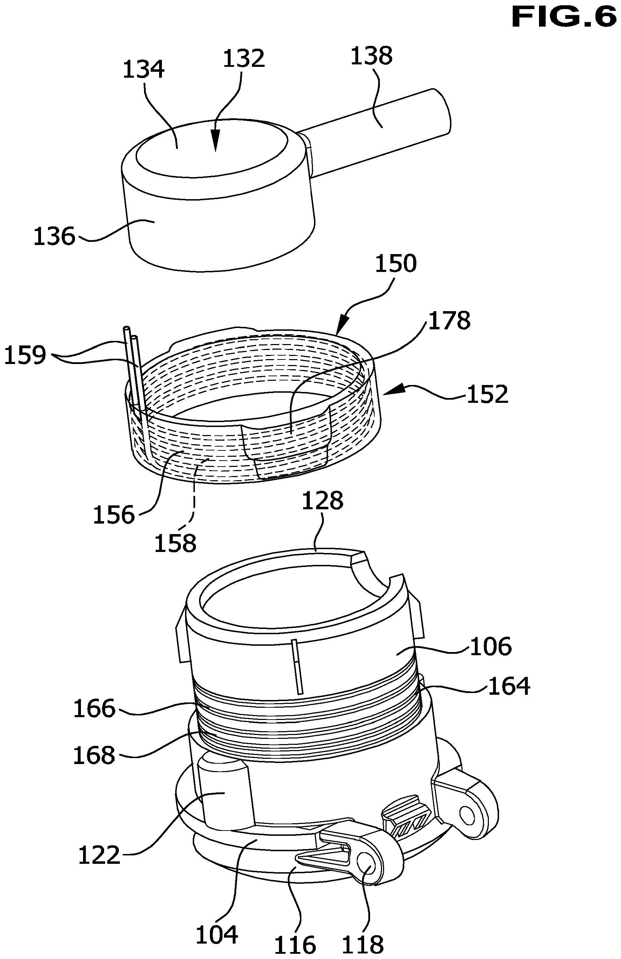

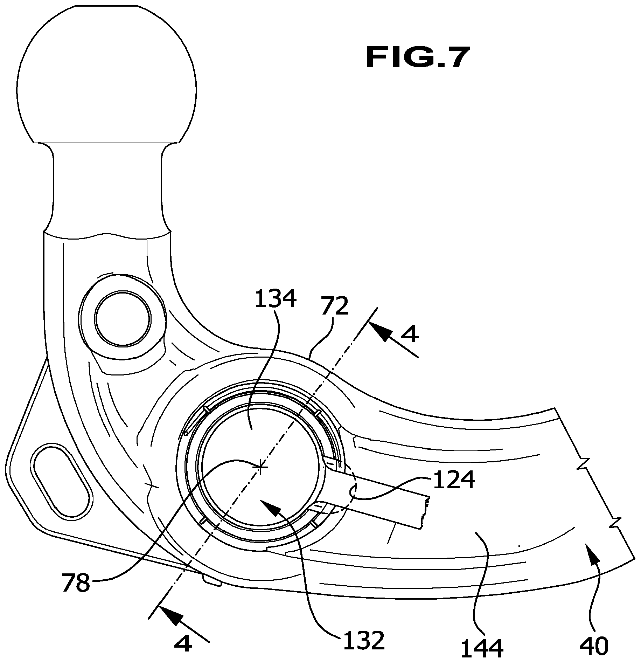

Beispielsweise ist der zweite Gehäuseabschnitt 106 - wie in Fig. 5 und 6 dargestellt - so ausgebildet, dass der zweite Gehäuseabschnitt 106 im Anschluss an den ersten Gehäuseabschnitt 104 mindestens einen Vorsprung 122, vorzugsweise auf gegenüberliegenden Seiten jeweils einen Vorsprung 122, aufweist, wobei jeder der Vorsprünge 122 in eine sich radial zur Mittelachse 78 erstreckende Ausnehmung 124 (Fig. 7) in dem Wandbereich 86 hinein erstreckt und wobei die Ausnehmung 124 derart an die Form des jeweiligen Vorsprungs 122 angepasst ist, dass durch das Zusammenwirken jeweiligen Vorsprungs 122 mit der entsprechenden Ausnehmung 124 eine drehfeste Fixierung des Gehäuses 102 der Einbaueinheit in der Aufnahme 72 erfolgt.

Dadurch ergibt sich durch das Zusammenwirken des jeweiligen Vorsprungs 122 mit der entsprechenden Ausnehmung 124 eine eindeutige Ausrichtung des Gehäuses 102 der Einbaueinheit 100 und somit auch eine eindeutige Ausrichtung des Deckels 116 und beispielsweise des Steckkontaktelements 112.

Wie außerdem in Fig. 5 bis 7 dargestellt, ist das Gehäuse 102 auf seiner dem ersten Gehäuseabschnitt 104 abgewandten Zugangsseite 130 mit einer Zugangsöffnung 128 versehen, welche durch einen als Ganzes mit 132 bezeichneten Abschlussdeckel verschließbar ist, wobei der Abschlussdeckel 132 eine Abschlusswand 134 und einen ausgehend von der Abschlusswand 134 sich erstreckenden zylindrischen Ansatz 136 aufweist, welcher durch die Zugangsöffnung 128 in den Gehäuseinnenraum 108 einführbar ist, um einen dichten Abschluss zwischen dem zweiten Gehäuseabschnitt 106 und dem Deckel 132 zu erreichen (Fig. 5, 6).

Ferner ist der Abschlussdeckel 132 noch mit einer hülsenartig ausgebildeten Kabelzuführung 138 versehen, durch welche ein Zuleitungskabel in den Gehäuseinnenraum 108 bei auf den zweiten Gehäuseabschnitt 106 aufgesetztem Abschlussdeckel 132 eingeführt werden kann.

Wie in Fig. 4 bis 7 dargestellt, schließt der Abschlussdeckel 132 somit den Gehäuseinnenraum 108 auf einer dem Deckel 116 gegenüberliegenden Seite ab wobei, wie in Fig. 4 dargestellt, der zylindrische Ansatz 136 mit Wänden des zweiten Gehäuseabschnitts 106 dicht abschließend verbindbar ist.

Zur Fixierung des Gehäuses 102 in der Aufnahme 72 erfolgt, wie in Fig. 3 und 4 angedeutet, ein Einschieben des Gehäuses 102 mit dem zweiten Gehäuseabschnitt 106 in einer Einschieberichtung 142 in die als Ganzes mit 72 bezeichnete Aufnahme vorzugsweise parallel zur Mittelachse 78 so weit, bis das Gehäuse 102 mit dem ersten Gehäuseabschnitt 104 an der ersten Außenseite 74 des Aufnahmebereichs 60 anliegt.

Dies erfolgt bei noch nicht montiertem Abschlussdeckel 132, so dass erst dann, wenn das Gehäuse 102 der Einbaueinheit 100 in die Aufnahme 72 eingeschoben ist, ein Aufsetzen des Abschlussdeckels 132 nach Verbinden der durch die Kabelzuführung 138 eingeführten Zuleitung mit dem Leitungsanschlusselement 114 erfolgt.

In diesem Fall liegt vorzugsweise die Kabelzuführung 138, wie in Fig. 7 dargestellt, in einer Vertiefung 144 des Trägerelements 40, die relativ zur zweiten Außenseite 76 der Aufnahme 72 zurückgesetzt ist, so dass die Kabelzuführung 138 im Wesentlichen gegen mechanische äußere Einflüsse durch das Trägerelement 40 geschützt ist.

Die Fixierung des Gehäuses 102 erfolgt durch eine in den Figuren 4 bis 6 dargestellte Fixiereinheit 150, welche bei dem dargestellten Ausführungsbeispiel einen Fixierkörper 152 aufweist, welcher seinerseits aus einem Vorkörper 154 aus plastisch verformbaren oder fließfähigen Material 156 gebildet ist, das aufgrund thermischer Einwirkung von einem ausgehärteten festen in einen plastisch verformbaren oder fließfähigen, insbesondere fließenden, Zustand übergeht.

Aus diesem Grund ist in den Vorkörper 154, eingebettet in das Material 156, eine Heizwicklung 158 aus einem Widerstandsheizdraht vorgesehen, wobei Anschlüsse 159 der Heizwicklung 158 aus dem Vorkörper 154 herausragen.

Der Vorkörper 154 hat in seinem Ausgangszustand eine lediglich ringförmige Form, die es ermöglicht, den Vorkörper 154 in einen Zwischenraum 162 zwischen dem zweiten Gehäuseabschnitt 106 und der Innenwand 84 der Aufnahme über den zweiten Gehäuseabschnitt 106 hinwegzuschieben, und zwar so weit, bis der Fixierkörper 152 einen Verbindungsbereich 164 des zweiten Gehäuseabschnitts umschließend angeordnet ist.

Der Verbindungsbereich 164 ist beispielsweise zwischen dem Vorsprung 122 oder den Vorsprüngen 122 und der Zugangsöffnung 128, vorzugsweise im Anschluss an den oder die Vorsprünge 122 an dem zweiten Gehäuseabschnitt 106 angeordnet.

Der Verbindungsbereich 164 des zweiten Gehäuseabschnitts 106 weist dabei eine in radialer Richtung zur Mittelachse 78 variierende Außenkontur auf, die beispielsweise radial nach außen vorspringende Rippen 166 und zwischen den Rippen 166 liegende radial nach innen versetzte Vertiefungen 168 aufweist.

Darüber hinaus umfasst die Aufnahme 72 einen Anformbereich 172, der beispielsweise ausgehend von dem Wandbereich 88 eine sich in die Innenwand 84 hinein erstreckende Vertiefung 174 aufweist, die zudem mit einer Stufe 176 die Innenwand 84, beispielsweise in den Wandbereich 88 übergeht.

Der in den Zwischenraum 162 einsetzbare Vorkörper 154 greift dabei noch nicht in den Anformbereich 172 und insbesondere nicht in die Vertiefung 174 oder die Stufe 176 ein, sondern verläuft radial innerhalb derselben und außerhalb des Verbindungsbereichs 164 und liegt beispielsweise an den Rippen 166 an, ohne und in die Vertiefungen 168 einzugreifen.

Wird nun die Heizwicklung 158 über die Anschlüsse 159 bestromt, heizt sich der Vorkörper 154 aus der Masse 156 auf und geht in einen fließfähigen, insbesondere fließenden Zustand über, in diesem Zustand erfolgt ein Umformen des Vorkörpers 154, insbesondere des Ringkörpers 62, sowohl durch Anformen desselben an den Verbindungsabschnitt 164 des zweiten Gehäuseabschnitts 106 als auch an die Anformbereiche 172 der Aufnahme 72 und insbesondere ein Eindringen der fließfähigen oder fließenden Masse sowohl in die Vertiefungen 168 zwischen den Rippen 166 als auch in die Vertiefung 174 der Anformbereiche 172 und somit auch ein Anlegen an die Stufe 176 eine Ausbildung des Fixierkörpers 154 nach Aushärtung der Masse 156.

Nach dem Aushärten des derart sowohl an den Verbindungsabschnitt 164 des zweiten Gehäuseabschnitts 106 als auch an die Anformbereiche 172 angeformten Fixierkörpers 152 ist dieser einerseits an dem Verbindungsabschnitt 164 durch das Anformen formschlüssig fixiert und weist andererseits in die Anformbereiche 172 eingreifende Ausformungen 178 auf, mit denen sich somit der Fixierkörper 152 insgesamt an der Aufnahme 72 abstützt und somit das Gehäuse 102 der Einbaueinheit 100 in einer Position fixiert, in welcher der erste Gehäuseabschnitt 104 an der ersten Außenseite 74 anliegt.

Insbesondere ist der Vorkörper 154 für den Fixierkörper 152 aus üblichem Heißklebermaterial hergestellt, welches durch die Heizwicklung 158 aufheizbar ist, damit flüssig wird und dann das Bestreben hat, sich an den Verbindungsabschnitt 164 des zweiten Gehäuseabschnitts 106 sowie an die Anformbereich 172 der Aufnahme 72 anzuformen und damit ist nach Aushärtung und Bildung des Fixierkörpers 152 das Gehäuse 102 in der Aufnahme 72 zuverlässig fixiert.

## Patentansprüche

1. Einbaueinheit für ein an einer Karosserie (12) eines Kraftfahrzeugs (10) angeordnetes Trägerelement (40) einer Trägereinheit (20), umfassend ein Gehäuse (102) mit einem sich auf einer ersten Außenseite (74) an einem Aufnahmebereich (60) des Trägerelements (40) abstützenden ersten Gehäuseabschnitt (104) und einem in eine Aufnahme (72) des Aufnahmebereichs (60) an dem Trägerelement (40) eingreifenden zweiten Gehäuseabschnitt (106), und eine sich bei in der Aufnahme (72) fixierter Einbaueinheit (100) an dem Aufnahmebereich (60) abstützende Fixiereinheit (150), wobei die Fixiereinheit (150) einen Fixierkörper (152) aufweist, der bei in der Aufnahme (72) fixierter Einbaueinheit (100) in einem plastisch verformbaren oder fließfähigen Zustand durch zumindest bereichsweises Anformen an einen Verbindungsbereich (164) des Gehäuses (102) und nachfolgendes Aushärten mit diesem Verbindungsbereich (164) verbunden ist und durch zumindest bereichsweises Anformen an einen Anformbereich (172) des Aufnahmebereichs (60) und nachfolgendes Aushärten mit dem Anformbereich (172) verbunden ist, wobei der Fixierkörper (152) aus einem Vorkörper (154) hergestellt ist, dessen Material (156) zum Anformen an den jeweiligen Bereich von einem festen in einen plastisch verformbaren oder fließfähigen Zustand überführbar ist und zur Bildung des das Gehäuse (102) an dem Aufnahmebereich (60) fixierenden Fixierkörpers (152) in den ausgehärteten Zustand überführbar ist.

2. Einbaueinheit nach Anspruch 1, **dadurch gekennzeichnet, dass** der Verbindungsbereich (164) des Gehäuses (102) umfangsseitig des zweiten Gehäuseabschnitts (106) angeordnet ist.

3. Einbaueinheit nach Anspruch 1 oder 2, **dadurch gekennzeichnet, dass** der Verbindungsbereich (164) des Gehäuses (102) eine sich in Richtung von dem ersten Gehäuseabschnitt (104) weg erstreckende und in radialer Richtung zur Mittelachse (78) des Gehäuses (102) variierende Oberflächenstruktur (166, 168) aufweist.

4. Einbaueinheit nach einem der voranstehenden Ansprüche, **dadurch gekennzeichnet, dass** der Anformbereich (172) eine sich in Richtung der Mittelachse (78) eines Aufnahmekanals (82) des Aufnahmebereichs erstreckende und dabei in radialer Richtung zur Mittelachse (78) des Aufnahmekanals (82) variierende Oberflächenstruktur (174, 176) aufweist, und/oder dass insbesondere ein Innenwandbereich (84) der Aufnahme (72) eine sich in Richtung von dem ersten Gehäuseabschnitt (104) weg erstreckende und sich dabei in radialer Richtung zur Mittelachse (78) des Aufnahmekanals aufweitende Oberflächenstruktur (174, 176) aufweist, und/oder dass insbesondere ein Innenwandbereich (84) der Aufnahme (72) sich mit zunehmender Erstreckung von dem ersten Gehäuseabschnitt (104) weg in radialer Richtung zur Mittelachse (78) erweiternd ausgebildet ist.

5. Einbaueinheit nach einem der voranstehenden Ansprüche, **dadurch gekennzeichnet, dass** insbesondere der Vorkörper (154) aus einem Material hergestellt ist, das thermisch in einen plastisch verformbaren oder fließfähigen Zustand und in einen ausgehärteten Zustand überführbar ist, und/oder dass insbesondere das Material in einen flüssigen Zustand und einen ausgehärteten bringbar ist, und/oder dass insbesondere der Vorkörper (154) aus einem Heißklebermaterial hergestellt ist, und/oder dass insbesondere der Vorkörper (154) neben dem thermisch in einen plastisch verformbaren oder fließfähigen Zustand überführbaren sowie thermisch aushärtbaren Material (156) in dieses eingebettete Heizelemente (158) aufweist, mittels welcher der plastische oder fließfähige Zustand des Materials (156), insbesondere durch Bestromen herstellbar ist, dass insbesondere die Heizelemente (158) in dem ausgehärteten Zustand des Fixierelements (152) in diesem eingebettet sind, und/oder dass insbesondere die Heizelemente (158) Anschlüsse aufweisen, die sich ausgehend von dem Vorkörper (154) in Richtung weg von dem ersten Gehäuseabschnitt (104) erstrecken.

6. Einbaueinheit nach einem der voranstehenden Ansprüche, **dadurch gekennzeichnet, dass** der Fixierkörper (152) im plastisch verformbaren oder fließfähigen Zustand sich bei in den Aufnahmebereich (60) eingesetztem zweiten Gehäuseabschnitt (106) sowohl an den Verbindungsbereich (164) des zweiten Gehäuseabschnitts (106) als auch an den Anformbereich (172) des Aufnahmebereichs (60) anformt.

7. Einbaueinheit nach einem der voranstehenden Ansprüche, **dadurch gekennzeichnet, dass** der Vorkörper (154) im nicht angeformten festen Zustand eine Vorform aufweist, die ermöglicht, dass dieser in einen Zwischenraum (162) zwischen der Innenwand (84) der Aufnahme (72) und dem zweiten Gehäuseabschnitt (106) einsetzbar ist und dass insbesondere der Vorkörper (154) zumindest als Teil eines Ringkörpers ausgebildet ist, dass insbesondere der Fixierkörper (152) bei an dem Aufnahmebereich (60) fixierter Einbaueinheit (100) und im angeformten Zustand in dem Zwischenraum (162) zwischen der Innenwand (84) der Aufnahme (72) und dem zweiten Gehäuseabschnitt (106) angeordnet ist, dass insbesondere der Fixierkörper (152) bei an dem Aufnahmebereich (60) fixierter Einbaueinheit (100) den Zwischenraum (162) zwischen der Innenwand (84) der Aufnahme (72) und dem zweiten Gehäuseabschnitt (106) zumindest teilweise ausfüllt, und/oder dass insbesondere im an dem Aufnahmebereich (60) fixierten Zustand der Einbaueinheit (100) der Fixierkörper (152) einerseits an dem Aufnahmebereich (60), insbesondere an der Innenwand (84) der Aufnahme (72), und andererseits umfangsseitig des zweiten Gehäuseabschnitts (106) anliegt.

8. Einbaueinheit nach einem der voranstehenden Ansprüche, **dadurch gekennzeichnet, dass** an dem Gehäuse (102), insbesondere an dem zweiten Gehäuseabschnitt (106), mindestens ein Vorsprung (122) angeordnet ist, der in eine an dem Aufnahmebereich (60) angeordnete Ausnehmung (124) eingreift und das Gehäuse (102) drehfest an dem Aufnahmebereich (60) festlegt, dass insbesondere der mindestens eine Vorsprung (122) an dem zweiten Gehäuseabschnitt (106) im Anschluss an den ersten Gehäuseabschnitt (104) angeformt ist, und/oder dass insbesondere an dem Gehäuse (102), insbesondere an dem zweiten Gehäuseabschnitt (106), mehrere Vorsprünge (122) angeordnet sind, von denen jeder in eine an dem Aufnahmebereich (60) angeordnete Ausnehmung (124) eingreift.

9. Einbaueinheit nach einem der voranstehenden Ansprüche, **dadurch gekennzeichnet, dass** der Verbindungsbereich (164) des zweiten Gehäuseabschnitts (106) im Anschluss an den mindestens einen Vorsprung (122) an dem zweiten Gehäuseabschnitt (106) angeordnet ist.

10. Einbaueinheit nach einem der voranstehenden Ansprüche, **dadurch gekennzeichnet, dass** der zweite Gehäuseabschnitt (106) auf einer dem ersten Gehäuseabschnitt (104) abgewandten Seite mit einem Abschlussdeckel (132) verschlossen ist.

11. Verfahren zum Fixieren einer Einbaueinheit für ein an einer Karosserie (12) eines Kraftfahrzeugs (10) angeordnetes Trägerelement (40) einer Trägereinheit (20), wobei die Einbaueinheit (100) ein Gehäuse (102) mit einem sich auf einer ersten Außenseite (74) an einem Aufnahmebereich (60) des Trägerelements (40) abstützenden ersten Gehäuseabschnitt (104) und einem in eine Aufnahme (72) des Aufnahmebereichs (60) des Trägerelements (40) eingreifenden zweiten Gehäuseabschnitt (106) aufweist, und die Einbaueinheit (100) bei dem Fixieren an dem Aufnahmebereich (60) durch eine sich bei an dem Aufnahmebereich (60) abstützende Fixiereinheit (150) fixiert wird, wobei die Fixiereinheit (150) durch einen Fixierkörper (152) gebildet wird, der bei in der Aufnahme (72) fixierter Einbaueinheit (100) in einem plastisch verformbaren oder fließfähigen Zustand durch zumindest bereichsweises Anformen an einen Verbindungsbereich (164) des Gehäuses (102) und nachfolgendes Aushärten mit diesem Verbindungsbereich (164) verbunden wird und durch zumindest bereichsweises Anformen an einen Anformbereich (172) der Aufnahme (72) und nachfolgendes Aushärten mit dem Anformbereich (172) verbunden wird und dass der Fixierkörper (152) aus einem Vorkörper (154) gebildet wird, dessen Material (156) zum Anformen an den jeweiligen Bereich von einem festen in einen plastisch verformbaren oder fließfähigen Zustand überführt wird und zur Bildung des das Gehäuse (102) an dem Aufnahmebereich fixierenden Fixierkörpers (152) in den ausgehärteten Zustand überführt wird.

12. Verfahren nach Anspruch 11, **dadurch gekennzeichnet, dass** der Fixierkörper (152) mit einem umfangsseitig des zweiten Gehäuseabschnitts (106) angeordneten Verbindungsbereich (164) des Gehäuses (102) verbunden wird, und/oder dass insbesondere der Fixierkörper (152) mit einem Verbindungsbereich (164) des zweiten Gehäuseabschnitts (106) verbunden wird, der eine sich in Richtung von dem ersten Gehäuseabschnitt (106) weg erstreckende und in radialer Richtung zur Mittelachse (78) des Gehäuses (102) variierende Oberflächenstruktur (166, 168) aufweist.

13. Verfahren nach einem der Ansprüche 11 und 12, **dadurch gekennzeichnet, dass** der Fixierkörper (152) mit einem sich in Richtung der Mittelachse (78) eines Aufnahmekanals (82) des Aufnahmebereichs erstreckenden und dabei in radialer Richtung zur Mittelachse (78) des Aufnahmekanals (82) variierenden Oberflächenstruktur (174, 176) des Anformbereichs (172) verbunden wird, und/oder dass insbesondere der Fixierkörper (152) mit einem Innenwandbereich (84) der Aufnahme (72) verbunden wird, der eine sich in Richtung von dem ersten Gehäuseabschnitt (104) weg erstreckende und sich dabei in radialer Richtung zur Mittelachse (78) des Aufnahmekanals aufweitende Oberflächenstruktur (174, 176) aufweist, dass insbesondere der Fixierkörper (152) mit einem Innenwandbereich (84) der Aufnahme (72) verbunden wird, der sich mit zunehmender Erstreckung von dem ersten Gehäuseabschnitt (104) weg in radialer Richtung zur Mittelachse (78) erweiternd ausgebildet ist.

14. Verfahren nach einem der Ansprüche 11 bis 13, **dadurch gekennzeichnet, dass** der Vorkörper (154) aus einem Material hergestellt ist, das thermisch in einen plastisch verformbaren oder fließfähigen Zustand und in einen ausgehärteten Zustand überführt wird, und/oder dass insbesondere das Material in einen flüssigen Zustand und einen ausgehärteten überführt wird, dass insbesondere der Vorkörper (154) aus einem Heißklebermaterial hergestellt wird, und/oder dass insbesondere in dem Vorkörper (154) neben dem thermisch in einen plastisch verformbaren oder fließfähigen Zustand überführbaren sowie thermisch aushärtbaren Material (156) in dieses Heizelemente (158) eingebettet werden, mittels welcher der plastische oder fließfähige Zustand des Materials (156), insbesondere durch Bestromen hergestellt wird, dass insbesondere die Heizelemente (158) in dem ausgehärteten Zustand des Fixierelements (152) in diesem eingebettet bleiben.

15. Verfahren nach einem der Ansprüche 11 bis 14, **dadurch gekennzeichnet, dass** der Fixierkörper (152) im plastisch verformbaren oder fließfähigen Zustand sich bei in die Aufnahme eingesetztem zweiten Gehäuseabschnitt (106) sowohl an den Verbindungsbereich (164) des zweiten Gehäuseabschnitts (106) als auch an den Anformbereich (172) des Aufnahmebereichs (60) angeformt wird.

16. Verfahren nach einem der Ansprüche 11 bis 15, **dadurch gekennzeichnet, dass** der Vorkörper (154) im nicht angeformten festen Zustand eine Vorform aufweist, die es ermöglicht, dass dieser in einen Zwischenraum (162) zwischen der Innenwand (84) der Aufnahme (72) und dem zweiten Gehäuseabschnitt (106) eingesetzt wird.

## Claims

1. An installation unit for a carrier element (40) of a carrier unit (20) arranged on a chassis (12) of a motor vehicle (10), comprising a housing (102) with a first housing section (104) supported on a first outer side (74) on a receiving region (60) of the carrier element (40) and a second housing section (106) engaging into a receptacle (72) of the receiving region (60) on the carrier element (40), and a fixing unit (150) supported on the receiving region (60) with the installation unit (100) fixed in the receptacle (72), wherein the fixing unit (150) has a fixing body (152), which, with the installation unit (100) fixed in the receptacle (72), in a plastically deformable or flowable state, by moulding at least at some parts to a connection region (164) of the housing (102) and subsequent curing is connected to this connection region (164) and by moulding at least at some parts to a moulding region (172) of the receiving region (60) and subsequent curing is connected to the moulding region (172), wherein the fixing body (152) is produced from a preform (154), the material (156) of which is convertible from a solid into a plastically deformable or flowable state for the moulding to the respective region and, for the formation of the fixing body (152) fixing the housing (102) to the receiving region (60), is convertible into the cured state.

2. An installation unit according to Claim 1, **characterised in that** the connection region (164) of the housing (102) is arranged at the periphery of the second housing section (106).

3. An installation unit according to Claim 1 or 2, **characterised in that** the connecting region (164) of the housing (102) has a surface structure (166, 168) extending in a direction away from the first housing section (104) and varying in radial direction to the central axis (78) of the housing (102).

4. An installation unit according to any of the preceding Claims, **characterised in that** the moulding region (172) has a surface structure (174, 176) extending in the direction of the central axis (78) of a receiving channel (82) of the receiving region and thereby varying in radial direction to the central axis (78) of the receiving channel (82), and/or **in that** in particular an inner wall region (84) of the receptacle (72) has a surface structure (174, 176) extending in a direction away from the first housing section (104) and thereby widening in radial direction to the central axis (78) of the receiving channel, and/or **in that** in particular an inner wall region (84) of the receptacle (72), with increasing distance from the first housing section (104), is formed widening in a radial direction to the central axis (78).

5. An installation unit according to any of the preceding Claims, **characterised in that** in particular the preform (154) is produced from a material which is thermally convertible into a plastically deformable or flowable state and is convertible into a cured state, and/or **in that** in particular the material can be brought into a fluid state and into a cured state, and/or **in that** in particular the preform (154) is produced from a hot-glue material, and/or **in that** in particular the preform (154), in addition to the material (156) which is thermally convertible into a plastically deformable or flowable state and is thermally curable, has heating elements (158) embedded into this, by means of which the plastic or flowable state of material (156) is producible, in particular by supplying current, **in that** in particular the heating elements (158) in the cured state of the fixing element (152) are embedded therein, and/or **in that** in particular the heating elements (158) have terminals which extend starting from the preform (154) in the direction away from the first housing section (104).

6. An installation unit according to any of the preceding Claims, **characterised in that** the fixing body (152), in the plastically deformable or flowable state and with the second housing section (106) inserted into the receiving region (60), is moulded both on the connection region (164) of the second housing section (106) and also on the forming region (172) of the receiving region (60).

7. An installation unit according to any of the preceding Claims, **characterised in that** the preform (154) in the unmoulded solid state has an initial configuration which permits this to be inserted into an intermediate space (162) between the inner wall (84) of the receptacle (72) and the second housing section (106) and **in that** in particular the preform (154) constitutes at least a part of an annular body, **in that** in particular the fixing body (152) with the installation unit (100) fixed to the receiving region (60) and in the moulded state, is arranged in the intermediate space (162) between the inner wall (84) of the receptacle (72) and the second housing section (106), **in that** in particular the fixing body (152) with the installation unit (100) fixed to the receiving region (60), at least partially fills the intermediate space (162) between the inner wall (84) of the receptacle (72) and the second housing section (106), and/or **in that** in particular, in the state of the installation unit (100) fixed to the receiving region (60), the fixing body (152) abuts on one side against the receiving region (60), in particular against the inner wall (84) of the receptacle (72), and on the other side peripherally against the second housing section (106).

8. An installation unit according to any of the preceding Claims, **characterised in that** there is arranged on the housing (102), in particularly on the second housing section (106), at least one projection (122), which engages in a recess (124) arranged at the receiving region (60) and fixes the housing (102) non-rotatably on the receiving region (60), **in that** in particular the at least one projection (122) on the second housing section (106) is formed next to the first housing section (104), and/or **in that** in particular there are arranged on the housing (102), in particular on the second housing section (106), a plurality of projections (122), each of which engage in a recess (124) arranged at the receiving region (60).

9. An installation unit according to any of the preceding Claims, **characterised in that** the connecting region (164) of the second housing section (106) is arranged next to the at least one projection (122) on the second housing section (106).

10. An installation unit according to any of the preceding Claims, **characterised in that** the second housing section (106), at the side remote from the first housing section (104), is closed off by a closure cover (132).

11. A method for fixing an installation unit for a carrier element (40) of a carrier unit (20) arranged on a chassis (12) of a motor vehicle (10), wherein the installation unit (100) has a housing (102) with a first housing section (104) supported on a first outer side (74) on a receiving region (60) of the carrier element (40) and a second housing section (106) engaging in a receptacle (72) of the receiving region (60) of the carrier element (40), and the installation unit (100) upon fixing to the receiving region (60) is fixed by a fixing unit (150) supported on the receiving region (60), wherein the fixing unit (150) is constituted by a fixing body (152), which with the installation unit (100) fixed in the receptacle (72), in a plastically deformable or flowable state, by moulding at least in parts to a connecting region (164) of the housing (102) and subsequent curing, is connected to this connecting region (164) and by, at least in parts, moulding to a moulding region (172) of the receptacle (72) and subsequent curing, is connected with the moulding region (172) and in that the fixing body (152) is constituted by a preform (154), the material (156) of which, for moulding at the respective region, is converted from a solid state into a plastically deformable or flowable state and, for constituting the fixing body (152) fixing the housing (102) to the receiving region, is converted into the cured state.

12. A method according to Claim 11, **characterised in that** the fixing body (152) is connected with a connecting region (164) of the housing (102) arranged peripherally of the second housing section (106), and/or **in that** in particular the fixing body (152) is connected to a connecting region (164) of the second housing section (106), which has a surface structure (166, 168) extending in the direction away from the first housing section (104) and varying in a radial direction to the central axis (78) of the housing (102).

13. A method according to any of Claims 11 and 12, **characterised in that** the fixing body (152) is connected to a surface structure (174, 176) of the moulding region (172) extending in the direction of the central axis (78) of a receiving channel (82) of the receiving region and thereby varying in the radial direction to the central axis (78) of the receiving channel (82), and/or **in that** in particular the fixing body (152) is connected to an inner wall region (84) of the receptacle (72) which has a surface structure (174, 176) extending in a direction away from the first housing section (104) and thereby widening in the radial direction to the central axis (78) of the receiving channel, **in that** in particular the fixing body (152) is connected to the inner wall region (84) of the receptacle (72), which with increasing distance away from the first housing section (104) widens in the radial direction to the central axis (78).

14. A method according to any of Claims 11 to 13, **characterised in that** the preform (154) is manufactured from a material which is converted thermally into a plastically deformable or flowable state and into a cured state, and/or **in that** in particular the material is converted into a flowing state and into a cured state, **in that** in particular the preform (154) is produced from a hot-glue material, and/or **in that** in particular in the preform (154), in addition to the material (156) which is thermally convertible into a plastically deformable or flowable state and also thermally curable, there are embedded therein heating elements (158), by means of which the plastic or flowable state of the material (156) is produced, in particular by the passage of current, **in that** in particular the heating elements (158), in the cured state of the fixing element (152), remain embedded therein.

15. A method according to any of Claims 11 to 14, **characterised in that** the fixing body (152), in the plastically deformable or flowable state with the second housing section (106) inserted in the receptacle, is moulded both to the connecting region (164) of the second housing section (106) and also to the moulding region (172) of the receiving region (60).

16. A method according to any of Claims 11 to 15, **characterised in that** the preform (154) in the unmoulded solid state has an initial configuration which allows it to be inserted in an intermediate space (162) between the inner wall (84) of the receptacle (72) and the second housing section (106).

## Revendications

1. Unité de montage pour un élément de support (40) d'une unité de support (20) disposé sur une carrosserie (12) d'un véhicule à moteur (10), comprenant un boîtier (102) avec une première partie de boîtier (104) s'appuyant sur un premier côté extérieur (74) sur une zone de réception (60) de l'élément de support (40) et une deuxième partie de boîtier (106) s'insérant dans un logement (72) de la zone de réception (60) sur l'élément de support (40), et une unité de fixation (150) s'appuyant sur la zone de réception (60) lorsque l'unité de montage (100) est fixée dans le logement (72), dans laquelle l'unité de fixation (150) présente un corps de fixation (152), qui lorsque l'unité de montage (100) est fixée dans le logement (72) dans un état pouvant être déformé plastiquement ou fluide par conformation au moins par endroits sur une zone de liaison (164) du boîtier (102) et ensuite durcissement est relié à cette zone de liaison (164) et par conformation au moins par endroits sur une zone de conformation (172) de la zone de réception (60) et ensuite durcissement est relié à la zone de conformation (172), dans laquelle le corps de fixation (152) est fabriqué à partir d'une préforme (154), dont le matériau (156) pour la conformation sur la zone respective peut être amené d'un état solide dans un état pouvant être déformé plastiquement ou fluide et pour la formation du corps de fixation (152) fixant le boîtier (102) sur la zone de réception (60) peut être amené dans l'état durci.

2. Unité de montage selon la revendication 1, **caractérisée en ce que** la zone de liaison (164) du boîtier (102) est disposée côté périphérie de la deuxième partie de boîtier (106).

3. Unité de montage selon la revendication 1 ou 2, **caractérisée en ce que** la zone de liaison (164) du boîtier (102) présente une structure superficielle (166, 168) s'étendant dans une direction s'éloignant de la première partie de boîtier (104) et variant dans la direction radiale par rapport à l'axe médian (78) du boîtier (102).

4. Unité de montage selon l'une quelconque des revendications précédentes, **caractérisée en ce que** la zone de conformation (172) présente une structure superficielle (174, 176) s'étendant en direction de l'axe médian (78) d'un canal de réception (82) de la zone de réception et ainsi variant dans la direction radiale par rapport à l'axe médian (78) du canal de réception (82), et/ou qu'en particulier une zone de paroi intérieure (84) du logement (72) présente une structure superficielle (174, 176) s'étendant dans une direction s'éloignant de la première partie de boîtier (104) et ainsi s'élargissant dans la direction radiale par rapport à l'axe médian (78) du canal de réception, et/ou qu'en particulier une zone de paroi intérieure (84) du logement (72) est réalisée de manière à s'élargir avec une étendue croissante s'éloignant de la première partie de boîtier (104) dans la direction radiale par rapport à l'axe médian (78).

5. Unité de montage selon l'une quelconque des revendications précédentes, **caractérisée en ce qu'**en particulier la préforme (154) est fabriquée à partir d'un matériau qui peut être amené thermiquement dans un état pouvant être déformé plastiquement ou fluide et dans un état durci, et/ou qu'en particulier le matériau peut être amené dans un état liquide et un durci, et/ou qu'en particulier la préforme (154) est fabriquée à partir d'un matériau adhésif thermofusible, et/ou qu'en particulier la préforme (154) présente en plus du matériau (156) pouvant être amené thermiquement dans un état pouvant être déformé plastiquement ou fluide ainsi que pouvant être durci thermiquement des éléments chauffants (158) incorporés dans celui-ci, au moyen desquels l'état plastique ou fluide du matériau (156) peut être obtenu en particulier par alimentation en courant, qu'en particulier les éléments chauffants (158) dans l'état durci de l'élément de fixation (152) sont incorporés dans celui-ci, et/ou qu'en particulier les éléments chauffants (158) présentent des raccords, qui s'étendent à partir de la préforme (154) dans une direction s'éloignant de la première partie de boîtier (104).

6. Unité de montage selon l'une quelconque des revendications précédentes, **caractérisée en ce que** le corps de fixation (152) dans l'état pouvant être déformé plastiquement ou fluide lorsque la deuxième partie de boîtier (106) est placée dans la zone de réception (60) se conforme aussi bien sur la zone de liaison (164) de la deuxième partie de boîtier (106) que sur la zone de conformation (172) de la zone de réception (60).

7. Unité de montage selon l'une quelconque des revendications précédentes, **caractérisée en ce que** la préforme (154) dans l'état solide non conformé présente une préforme, qui permet que celle-ci puisse être placée dans un espace intérieur (162) entre la paroi intérieure (84) du logement (72) et la deuxième partie de boîtier (106) et qu'en particulier la préforme (154) est réalisée au moins en tant que partie d'un corps annulaire, qu'en particulier le corps de fixation (152) lorsque l'unité de montage (100) est fixée sur la zone de réception (60) et dans l'état conformé est disposé dans l'espace intérieur (162) entre la paroi intérieure (84) du logement (72) et la deuxième partie de boîtier (106), qu'en particulier le corps de fixation (152) lorsque l'unité de montage (100) est fixé sur la zone de réception (60) remplit au moins partiellement l'espace intérieur (162) entre la paroi intérieure (84) du logement (72) et la deuxième partie de boîtier (106), et/ou qu'en particulier dans l'état de l'unité de montage (100) fixée sur la zone de réception (60) le corps de fixation (152) s'applique d'une part sur la zone de réception (60), en particulier sur la paroi intérieure (84) du logement (72), et d'autre part côté périphérie de la deuxième partie de boîtier (106).

8. Unité de montage selon l'une quelconque des revendications précédentes, **caractérisée en ce qu'**au moins une saillie (122), qui s'insère dans un évidement (124) disposé sur la zone de réception (60) et immobilise le boîtier (102) de manière solidaire en rotation sur la zone de réception (60), est disposée sur le boîtier (102), en particulier sur la deuxième partie de boîtier (106), qu'en particulier la au moins une saillie (122) est conformée sur la deuxième partie de boîtier (106) à la suite de la première partie de boîtier (104), et/ou qu'en particulier plusieurs saillies (122), dont chacune s'insère dans un évidement (124) disposé sur la zone de réception (60), sont disposées sur le boîtier (102), en particulier sur la deuxième partie de boîtier (106).

9. Unité de montage selon l'une quelconque des revendications précédentes, **caractérisée en ce que** la zone de liaison (164) de la deuxième partie de boîtier (106) est disposée à la suite de la au moins une saillie (122) sur la deuxième partie de boîtier (106).

10. Unité de montage selon l'une quelconque des revendications précédentes, **caractérisée en ce que** la deuxième partie de boîtier (106) est fermée avec un couvercle de fermeture (132) sur une face opposée à la première partie de boîtier (104).

11. Procédé pour fixer une unité de montage pour un élément de support (40) d'une unité de support (20) disposé sur une carrosserie (12) d'un véhicule à moteur (10), dans lequel l'unité de montage (100) comprend un boîtier (102) avec une première partie de boîtier (104) s'appuyant sur un premier côté extérieur (74) sur une zone de réception (60) de l'élément de support (40) et une deuxième partie de boîtier (106) s'insérant dans un logement (72) de la zone de réception (60) de l'élément de support (40), et l'unité de montage (100) est fixée par une unité de fixation (150) s'appuyant sur la zone de réception (60) lors de la fixation sur la zone de réception (60),
dans lequel l'unité de fixation (150) est formée par un corps de fixation (152), qui lorsque l'unité de montage (100) est fixée dans le logement (72), dans un état pouvant être déformé plastiquement ou fluide par conformation au moins par endroits sur une zone de liaison (164) du boîtier (102) et ensuite durcissement est relié à cette zone de liaison (164) et par conformation au moins par endroits sur une zone de conformation (172) du logement (72) et ensuite durcissement est relié à la zone de conformation (172), et que le corps de fixation (152) est formé à partir d'une préforme (154), dont le matériau (156) pour la conformation sur la zone respective peut être amené d'un état solide dans un état pouvant être déformé plastiquement ou fluide et pour la formation du corps de fixation (152) fixant le boîtier (102) sur la zone de réception peut être amené dans l'état durci.

12. Procédé selon la revendication 11, **caractérisé en ce que** le corps de fixation (152) est relié à une zone de liaison (164) du boîtier (102) disposée côté périphérie de la deuxième partie de boîtier (106), et/ou qu'en particulier le corps de fixation (152) est relié à une zone de liaison (164) de la deuxième partie de boîtier (106), qui présente une structure superficielle (166, 168) s'étendant dans une direction s'éloignant de la première partie de boîtier (104) et variant dans une direction radiale par rapport à l'axe médian (78) du boîtier (102).

13. Procédé selon l'une quelconque des revendications 11 et 12, **caractérisé en ce que** le corps de fixation (152) est relié à une structure superficielle (174, 176) de la zone de conformation (172) s'étendant en direction de l'axe médian (78) d'un canal de réception (82) de la zone de réception et ainsi variant dans la direction radiale par rapport à l'axe médian (78) du canal de réception (82), et/ou qu'en particulier le corps de fixation (152) est relié à une zone de paroi intérieure (84) du logement (72), qui présente une structure superficielle (174, 176) s'étendant dans une direction s'éloignant de la première partie de boîtier (104) et ainsi s'élargissant dans la direction radiale par rapport à l'axe médian (78) du canal de réception, qu'en particulier le corps de fixation (152) est relié à une zone de paroi intérieure (84) du logement (72), qui est réalisée de manière à s'élargir avec une étendue croissante à distance de la première partie de boîtier (104) dans la direction radiale par rapport à l'axe médian (78).

14. Procédé selon l'une quelconque des revendications 11 à 13, **caractérisé en ce que** la préforme (154) est fabriquée à partir d'un matériau qui peut être amené thermiquement dans un état pouvant être déformé plastiquement ou fluide et dans un état durci, et/ou qu'en particulier le matériau peut être amené dans un état liquide et un durci, qu'en particulier la préforme (154) est fabriquée à partir d'un matériau en adhésif thermofusible, et/ou qu'en particulier dans la préforme (154) en plus du matériau (156) pouvant être amené thermiquement dans un état pouvant être déformé plastiquement ou fluide ainsi que pouvant être durci thermiquement des éléments chauffants (158) sont incorporés dans celui-ci, au moyen desquels l'état plastique ou fluide du matériau (156) peut être obtenu en particulier par alimentation en courant, qu'en particulier les éléments chauffants (158) dans l'état durci de l'élément de fixation (152) sont incorporés dans celui-ci.

15. Procédé selon l'une quelconque des revendications 11 à 14, **caractérisé en ce que** le corps de fixation (152) dans l'état pouvant être déformé plastiquement ou fluide lorsque la deuxième partie de boîtier (106) est placée dans le logement est conformée aussi bien sur la zone de liaison (164) de la deuxième partie de boîtier (106) que sur la zone de conformation (172) de la zone de réception (60).

16. Procédé selon l'une quelconque des revendications 11 à 15, **caractérisé en ce que** la préforme (154) présente dans l'état solide non conformé une préforme, qui permet que celle-ci soit placée dans un espace intérieur (162) entre la paroi intérieure (84) du logement (72) et la deuxième partie de boîtier (106).
